# EUROPEAN PATENT APPLICATION

(11) **EP 4 542 196 A1**
(43) Date of publication of application: **23.04.2025**
(21) Application number: 23823212.8
(22) Date of filing: 15.06.2023
(51) Int. Cl.: G01N 1/34, G01N 1/40

(54) **SAMPLE PREPARATION SYSTEM AND METHOD FOR EXTRACTING ANALYTE FROM SAMPLE BY MEANS OF SAMPLE PREPARATION SYSTEM**

(30) Priority: 16.06.2022 CN 202210679255
(71) Applicant: Thermo Fisher Scientific (Shanghai) Instruments Co., Ltd., Shanghai 201206 (CN); Dionex Corporation, Sunnyvale, CA 94085 (US)
(72) Inventor: CHEN, Chen, Shanghai 201206 (CN); WU, Hongtian, Shanghai 201206 (CN); ZHAO, Yongxin, Shanghai 201206 (CN); LU, Duanjun, Shanghai 201206 (CN); SRINIVASAN, Kannan, Sunnyvale California 94085 (US); HONG, Wei, Shanghai 201206 (CN)
(74) Representative: Boult Wade Tennant LLP
(86) International application number: PCT/CN2023/100371
(87) International publication number: WO 2023/241646

(57) **Abstract**

The present invention provides a method for extracting an analyte from a sample through a gas preparation system, comprising the steps of supplying gas and liquid solvent which solvent can dissolving the analyte in the sample to the sample cell; receiving the liquid solvent containing the analyte from the extraction module to the evaporation container; evaporating the liquid solvent containing the analyte in the evaporation container, wherein the evaporation module is in fluid communication with the sample cell; and starting to perform the evaporating step is allowed after at least a part of the liquid solvent containing the analyte from the extraction module enters the evaporation container. The method integrates extraction and evaporation together to allow "evaporation/concentration online", thereby avoiding the transfer process of the analyte, saving labor, increasing processing speed, and avoiding the risk of contamination. The present invention also provides a gas preparation system for extracting an analyte from a sample.

## Description

### Technical Field

The present invention relates to a gas preparation system, which for example relates to solvent extraction technology. The present invention also relates to a method for extracting analyte from a sample by using the gas preparation system.

### Background

In modern analytical chemistry, need exists in analyzing large quantity of samples, especially in an automated manner. To this end, from the samples, a target chemical substance (also referred as an analyte) must firstly be extracted, and then it can be tested by means of analytical techniques.

The samples may be extracted by methods including Soxhlet extraction, ultrasonic extraction, microwave extraction, accelerated solvent extraction, etc. The concept of the accelerated solvent extraction was introduced in 1995 and is also referred as pressurized solvent extraction, pressurized fluid extraction or enhanced solvent extraction. The accelerated solvent extraction can be used to replace relatively conventional Soxhlet extraction, ultrasonication, boiling, wrist-action shakers, etc. The accelerated solvent extraction is extracting solid and colloidal substances by utilizing a special physicochemical property of a solvent at a certain temperature and pressure. The method is characterized by a rapid speed, a small amount of a solvent used, good reproducibility, etc. The method is developed and commercialized by Dionex Corporation which has applied for several U.S. patents for its equipment, such as U.S. Patent Nos. 5,647,976; 5,843,311; and 5,785,856.

Specifically, for example, in the solid-liquid extraction technique, an analyte can be dissolved in a liquid solvent by treating a solid sample by the liquid solvent. Such a solid sample may typically be placed within a sample cell of a gas preparation system. Therefore, there is a need to cause the liquid solvent to flow into the sample cell loaded with the solid sample to immerse the sample in the liquid solvent. When the liquid solvent contains the analyte which is dissolved from the sample, the liquid solvent may be separated from the sample for further concentration, and then quantified by means of a suitable analytical technique. The example of the analytical technique may be, for example, a liquid chromatograph coupled to a detector such as a conductivity detector, a charge detector, a UV-visible spectrometer, or a mass spectrometer.

To facilitate subsequent quantitative analysis (e.g., in a liquid chromatograph) during a sample preparation process, it is sometimes necessary to concentrate a large amount of a liquid solvent containing analyte after the analyte is extracted by the liquid solvent from the sample. So, properly, the liquid solvent containing the analyte may be collected from the sample cell by a container (also referred to as a collection vial) by using an extraction apparatus. The liquid solvent in the collection container is then transferred to a solvent evaporation apparatus, either manually by an operator or by an automated device.

The solvent evaporation apparatus, known as a conventional laboratory apparatus, is mainly to distil a volatile solvent under reduced pressure or heating. By such an evaporation apparatus, it is possible to concentrate a large amount of a liquid solvent to a desired amount. In an example, after concentration, the extracted analyte needs to be transferred to a sample vial of, for example, only about 2 ml, and then is analyzed by liquid chromatography.

The evaporation and concentration process described above leads to unnecessary loss of the analyte in the liquid solvent. Such loss due to transferring is generally unavoidable, especially if the analyte is volatile. In addition, it is also necessary to manually rinse the collection vial to improve the recovery rate of the extract.

Therefore, there is always a need to increase the concentration efficiency for the extract after extraction (e.g., to reduce the amount of loss, to speed up concentration, etc.).

In addition, to speed up the (e.g., solid-liquid) extraction process, it is also known in the prior art to increase the solubility of the analyte by heating the liquid solvent itself. However, because the analyte may decompose or react with other chemicals in the solid sample, and a high temperature may cause the liquid solvent to vaporize and significantly weaken the extraction property of the solvent, the effect of improving the extraction efficiency by such a manner is limited.

To improve the extraction efficiency, the liquid solvent can be combined with gas to form a mixture before the liquid solvent flows into the sample cell. After entering the sample cell, the gas phase in the mixture can diffuses faster than the liquid solvent phase by orders of magnitude. Thus, even the analyte does not dissolve in the gas, adding the gas can generally improve the mass transfer property of the liquid solvent. Overall, the gas-assisted solvent extraction technique not only reduces the amount of solvent used, but also significantly shortens extraction time.

However, for this gas-assisted solvent extraction technique, there is still room to further increase the extraction recovery rate and system efficiency therefor.

### Summary

The present invention provides a method of extracting analyte from a sample with a gas preparation system, the gas preparation system comprising an extraction module and an evaporation module which are selectively in fluid communication, wherein the extraction module comprises a sample cell for placing the sample containing the analyte, and the evaporation module comprises an evaporation container for evaporating liquid solvent containing the analyte. The method may include the following steps: a supplying step of supplying the sample cell with gas and liquid solvent which solvent can dissolve the analyte in the sample; a receiving step of receiving the liquid solvent containing the analyte from the extraction module to the evaporation container; an evaporating step of evaporating the liquid solvent containing the analyte in the evaporation container, wherein the evaporation module is in fluid communication with the sample cell; wherein starting to perform the evaporating step is allowed after at least a part of the liquid solvent containing the analyte from the extraction module enters the evaporation container.

By means of the above-mentioned method, the extraction process and the evaporation process are integrated together, allowing the liquid solvent containing the analyte to be "evaporated/concentrated in situ" or "evaporated/concentrated online". Thus, the transfer process of the analyte can be omitted, thereby saving labor, improving the processing speed, and avoiding the risk of the analyte contacting the atmosphere or being contaminated in other ways, thereby generally optimizing the sample preparation efficiency. In the present invention, the term "at least a part" includes allowing the evaporating step to start to perform after a part or all of the liquid solvent containing the analyte from the extraction module enters the evaporation container. In the case where the evaporating step is allowed to start as soon as only a part of the liquid solvent enters the evaporation container, evaporation can be allowed to be performed simultaneously with extraction, such that the processing speed of sample preparation is extremely high. In the case where the evaporating step is allowed to start after all of the liquid solvent enters the evaporation container, high energy efficiency of the evaporation equipment can be achieved, and the flexibility of the system can also be improved (for example, allowing centralized evaporation after multiple extractions).

It can be understood that in the present invention, the above-mentioned steps may be (partially) overlapped with each other in time. For example, the liquid solvent may be received into the evaporation container at the same time as the supplying step. For another example, evaporation may be performed at the same time as the receiving step. However, it should be noted that the three steps of "supplying", "receiving" and "evaporating" do not necessarily occur at the same time. For example, the receiving may be performed after the supplying is completed, and the evaporation may also be started after the receiving is completed.

Advantageously, the supplying step comprises a first supplying sub-step of supplying the sample cell with a mixture of the gas and the liquid solvent.

By supplying a gas-liquid mixture, the convection between the sample and the liquid solvent and the diffusion gradient of the extraction solvent from the solid sample can be increased. Therefore, the extraction recovery rate can be increased with the amount of liquid solvent being the same or reduced, and the extraction can be completed in a shorter time period, that is, the processing volume per unit time is significantly increased.

Preferably, the first supplying sub-step includes supplying gas with a preset flow rate to the liquid solvent by means of a gas flow controlling device, during supplying the mixture, so as to mix it with the liquid solvent.

Thus, a continuous and stable gas flow can be provided to the sample cell. Since the gas flow remains stable, the proportion of the gas in the mixture of liquid solvent and gas will be stable, and the flow ratio of gas to liquid solvent is precisely controlled. This can make the mixing of gas in the mixture, that is, the mixing of gas into liquid solvent, uniform.

In addition, the gas preparation system may further include a regulation device arranged between the sample cell and the evaporation container, the regulation device including an inlet in communication with the sample cell and an outlet in communication with the evaporation container, and the fluid can flow out from the inlet via a flow path inside the regulation device out of the outlet. The receiving step of the present invention includes regulating opening degree of the flow path based on the pressure in the sample cell by means of the regulation device, thereby maintaining the pressure in the sample cell within a preset range, and the liquid solvent is received into the evaporation container via the flow path.

When the pressure in the sample cell can be stably maintained at a relatively high preset pressure, this allows for a significant increase in extraction efficiency in addition to ensuring that the liquid solvent is not vaporized in the sample cell. Regulating opening degree of the flow path based on the pressure in the sample cell can provide a negative feedback for pressure fluctuation in the sample cell, so that it returns to its stable pressure as soon as possible.

In an embodiment in which gas with a preset flow is supplied by means of a gas flow controlling device and the pressure in the sample cell is maintained within a preset range by means of a regulation device, the liquid solvent can be maintained still in a liquid state at a high temperature under a stable (high) pressure, while promoting a better mixing of the gas into the liquid solvent to produce a more uniform gas-liquid mixture, thereby increasing the extraction recovery rate.

In particular, the extraction module may include multiple sample cells and the evaporation module includes multiple evaporation containers, wherein each sample cell of the multiple sample cells is selectively in fluid communication with a corresponding evaporation container of the multiple evaporation containers, wherein the first supplying sub-step may include multiple supplying cycles in each of which the mixture is sequentially (in a predetermined order) supplied to each sample cell of the multiple sample cells.

By sequentially supplying the mixture to each sample cell in each supply cycle, it is possible to benefit from higher extraction recovery rate while maintaining high throughput.

In some embodiments, the time duration of supplying the mixture to each sample cell in the same supply cycle may be equal. In other embodiments, the supply amount of the mixture to each sample cell in the same supply cycle may be equal.

In the case of multiple sample cells, in order to shorten the overall extraction time of the multiple sample cells, a more uniform extraction among the sample cells is advantageous. To this end, it is desirable that the extraction conditions among the sample cells are kept as consistent as possible (for example, the physical parameters during extraction, such as pressure, temperature, flow rate, etc., are more consistent). Therefore, the present invention designs the same supply time or supply amount for the same supply cycle. In addition, this can also obtain a more consistent extraction recovery rate from each sample cell.

Advantageously, in the evaporating step, the liquid solvent containing the analyte in the evaporation container can be evaporated by heating the evaporation container and/or reducing the pressure inside the evaporation container. The liquid solvent in the evaporation container can be evaporated quickly by heating and/or reducing the pressure, thereby improving the sample preparation efficiency.

In addition, the method may further comprise preheating the evaporation container before the evaporating step. By preheating the evaporation container before starting the evaporation process, the evaporation container can reach a favorable evaporation condition at the beginning of the evaporation process, thereby promoting the improvement of evaporation efficiency.

In addition, the method may further comprise heating the sample cell before the supplying step. By heating the sample cell, the sample can be in a suitable extraction condition when the liquid solvent is supplied to the sample cell, thereby improving the extraction efficiency.

The present invention also provides a gas preparation system for extracting analyte from a sample, comprising an extraction module including a sample cell for placing the sample containing the analyte; a first supply module capable of supplying gas and a liquid solvent which solvent can dissolve the analyte in the sample to the sample cell; an evaporation module comprising an evaporation container for evaporating liquid solvent containing the analyte, wherein the evaporation container is in fluid communication with the sample call when the liquid solvent is evaporated; a controller configured to allow the evaporation container to evaporate the liquid solvent containing the analyte in the container after at least a part of the liquid solvent containing the analyte from the extraction module enters the evaporation container.

Advantageously, the first supply module may include a mixing means for mixing the gas with the liquid solvent for supplying a mixture to the sample cell. By means of the mixing means, a more uniform gas-liquid mixture can be supplied to the sample cell, thereby improving the extraction efficiency.

Preferably, the first supply module may include a first supply pipeline for supplying gas and a gas flow controlling device in fluid communication with the first supply pipeline. The gas flow controlling device may be configured so that the gas with a preset flow rate flows into the mixing means when the first supply module supplies the mixture to the sample cell, so as to mix the gas with the liquid solvent.

Particularly preferably, the gas preparation system may further comprise a regulation device arranged between the sample cell and the evaporation container, wherein the regulation device includes an inlet in communication with the sample cell and an outlet in communication with the evaporation container, wherein fluid can flow from the inlet via a flow path inside the regulation device out of the outlet, and the regulation device is configured to regulate opening degree of the flow path based on pressure in the sample cell, thereby maintaining the pressure in the sample cell within a preset range.

By means of the regulation device, a negative feedback can be provided for the pressure fluctuation in the sample cell so that it returns to its stable pressure as quickly as possible, that is, the pressure in the sample cell is stabilized within a relatively small preset range.

For example, the regulation device may include a first valve body portion, a second valve body portion and a cavity defined by them, wherein the inlet and the outlet are disposed on the first valve body portion, wherein a pre-loaded assembly of the regulation device is supported in the cavity and is capable of being moved between a blocking position for blocking the flow path and a non-blocking position for releasing the flow path, the opening degree can be defined by the space between the pre-loaded assembly and the first valve body portion.

By means of the above mentioned pre-loaded assembly of the regulation device, the regulation device can maintain the pressure of the sample cell at a preset stable pressure with a simple configuration.

In some embodiments, the extraction module may include multiple sample cells, and the evaporation module may include multiple evaporation containers, wherein each sample cell of the multiple sample cells may be selectively in fluid communication with a corresponding evaporation container of the multiple evaporation containers.

Advantageously, the first supply module may further include a switching valve, which may have multiple operational configurations, each of which may be used to direct the liquid solvent to flow to a corresponding sample cell of the multiple sample cells in a corresponding time period of each supply cycle.

By means of the multiple operational configurations of the switching valve, it is possible to easily and stably direct the liquid solvent into the corresponding sample cells in sequence.

In addition, the first supply pipeline may include multiple branch pipelines and multiple switching means, wherein each switching means of the multiple switching means is in communication with a corresponding branch pipeline of the multiple branch pipelines, such that the one branch pipeline can be selectively in fluid communication with a corresponding sample cell of the multiple sample cells, wherein by means of the multiple switching means, the gas can be directed to flow to a corresponding sample cell of the multiple sample cells in a corresponding time period of each supply cycle.

By means of the multiple switching means, the on-off of the fluid in each branch pipeline of the first supply pipeline can be independently controlled, thereby making it easy to direct the gas to the corresponding sample cells in sequence.

In particular, the gas preparation system may further comprise multiple regulation devices, wherein one regulation device is arranged between each sample cell and a corresponding evaporation container. By providing one regulation device on each path of the multiple paths, it is possible to ensure that the pressure on each path remains stable.

For example, the evaporation module may include a first heating device to evaporate the liquid solvent containing the analyte in the evaporation container by heating the evaporation container.

### BRIEF DESCRIPTION OF THE DRAWINGS

FIG. 1 shows a simplified architecture diagram of an embodiment of a gas preparation system according to the present invention, which embodiment involves a combination of four-channel extraction and four-channel evaporation;
FIG. 2 shows a simplified schematic diagram of another embodiment of a gas preparation system according to the present invention, which embodiment involves a combination of two-channel extraction and two-channel evaporation;
FIG. 3 shows a simplified schematic diagram of yet another embodiment of a gas preparation system according to the present invention, which embodiment involves a combination of two-channel extraction and two-channel evaporation;
FIG. 4 shows a general flow diagram of an embodiment of a gas preparation system according to the present invention; and
FIG. 5 shows a diagram of the pressure inside a sample cell when using the regulation device of the gas preparation system according to the invention.

### List of reference numerals

- 100: Gas preparation system
- 110: First supply module
- 111: First supply pipeline
- 111a-111e: First to fifth branch pipelines (of the first supply pipeline)
- 112: Second supply pipeline
- 112a-112d: First to fourth branch pipelines (of the second or mixed supply pipeline)
- 113: Solvent pump
- 114: Gas flow controlling device
- 115: Switching valve
- 116a-116e: First to fifth switching means
- 117: Mixing means
- 118: Pressure sensor
- 122a-122d: First to fourth sample cells
- 124a-124d: First to fourth pre-heaters
- 130a-130d: First to fourth regulation devices
- 141a-141d: First to fourth evaporation containers
- 142a-142d: First to fourth vacuum pipelines
- 144: Vacuum valve
- 145: Vacuum sensor
- 152: Gas source
- 153: Filter
- 154: Solvent source
- 155: Solvent mixing valve.

### DETAILED DESCRIPTION

Herein, the gas preparation system and the method for extracting analytes from a sample by using the gas preparation system are mainly described with reference to the gas-assisted solvent extraction technology and the apparatus thereof, but it can be understood that the gas preparation system and the method for extracting analytes from a sample by using the gas preparation system of the present invention are firstly not limited to the accelerated solvent extraction technology, they can also be for example technology of solid-phase extraction (SPE), pressurized liquid extraction (PLE) or other extraction technologies known in the art, and secondly, they are not limited to gas-assisted solvent extraction technology. In addition, the gas preparation system of the present invention is not only limited to being able to realize functions such as extraction and evaporation, but also may be a system that performs various functions including extraction and evaporation, especially an automatic gas preparation system.

In the present invention, the term "sample" refers to a substance that contains chemicals to be analyzed (or "analyte") when no extraction is performed. The sample is suitable for being placed in the gas preparation system of the present invention, especially in its extraction module. For example, the sample can be loaded into the sample cell of the extraction module when required, while can also be directly pre-integrated into the sample cell of the extraction module, and can even be placed in the sample cell of the extraction module during the extraction process (for example, in the case of multi-path extraction). The specific form of the sample is generally solid phase, but semi-solid, colloid, etc. are not excluded. In addition, the sample may be ground, mixed with a dispersant, or may be subjected to other pre-treatments, prior to be placed in the extraction module, which are not described in detail herein.

In the present invention, the term "analyte" refers to the substance to be analyzed contained in the sample, such as fatty substances in food, certain chemical agents in pesticides, etc. According to the sample preparation principle of the present invention, when the liquid solvent flows through the sample, the analyte contained in the sample may be dissolved, such that the liquid solvent flowing out of the sample cell may contain this analyte, so as to facilitate the subsequent quantitative or qualitative analysis of the analyte. The liquid solvent involved in the present invention for dissolving the analyte therein may comprise various types, such as n-hexane, DCM (dichloromethane), acetone, etc., and the gas involved in the present invention can preferably use inert gas such as nitrogen.

In the present invention, the term "between" refers to the positioning of a device or component in a flow path. For example, when reference is made to the regulation device being arranged between the sample cell and the evaporation container, it means that the regulation device is located downstream of the sample cell (i.e., after the sample cell) and upstream of the evaporation container (i.e., before the evaporation container) as viewed in the fluid flow direction.

In the present invention, the term "extraction recovery rate" refers to the recovery rate compared with the standard sample, for example, a ratio of the concentration of the extracted sample obtained by a gas chromatography-mass spectrometry (GC-MS) analysis to the nominal concentration. The specific calculation process is as follows: obtaining a standard solvent by preparing a certain amount of standard sample with a fixed volume of solvent, directly sending the standard solvent to the GC-MS to analyze the concentration, and then a test baseline for the recovery rate can be obtained. Assuming that there is no any loss of the standard sample, the baseline represents a 100% recovery rate. Then, the same amount of standard sample is added to the sample in the sample cell. During the extraction process, the standard sample is extracted by the solvent and collected into the final concentrated sample, and finally the concentrated sample is sent to the GC-MS for analyzing concentration. If all the standard samples can be extracted and remained in the final concentrated sample, the analysis result should be consistent with the baseline, that is, the recovery rate can reach 100%. However, due to various reasons, such as the failure of full extraction of the standard sample, or volatilization of the standard sample during the concentration process, sample loss will occur, resulting in an actual recovery rate less than 100%. In addition, the accuracy of GC-MS will also affect the test results of the recovery rate, for example, it will cause a random error in the recovery rate measurement of about 10%. This error will sometimes cause the test results of the concentrated sample to be higher than the test results of the standard solvent, that is, the calculated recovery rate will be greater than 100%. Differently, in the present invention, high extraction efficiency means obtaining the highest possible recovery rate by as little work (including solvent, temperature, time) as possible.

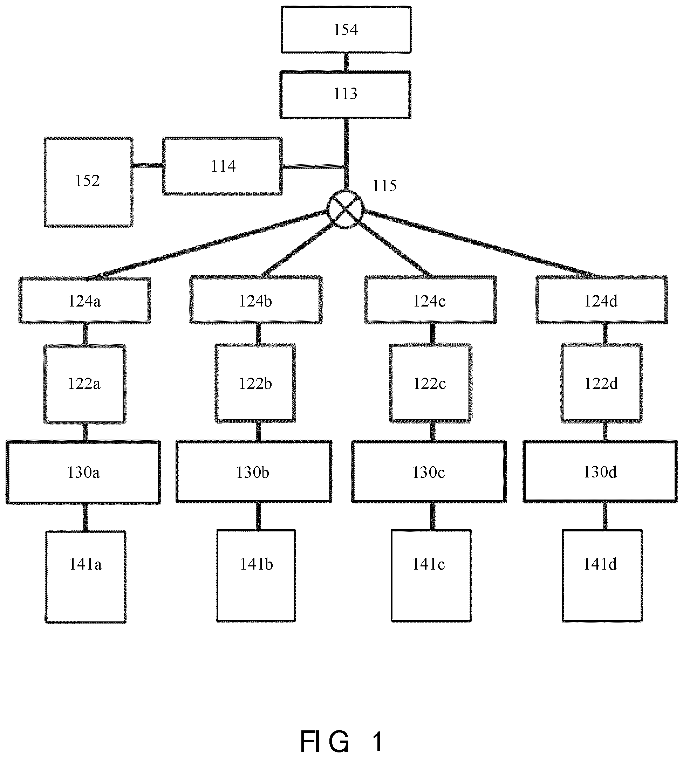

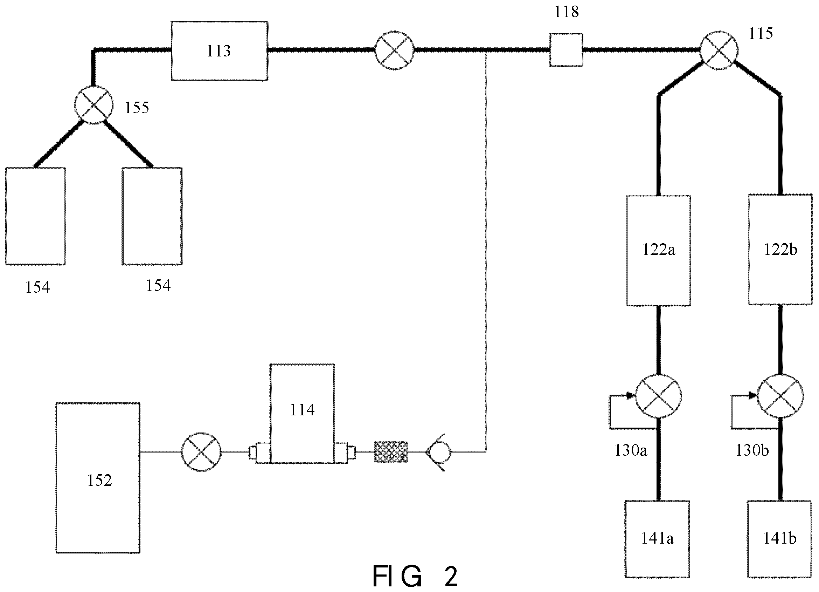

First, the gas preparation system 100 of the present invention includes an extraction module, which may include one or more sample cells, in which sample containing analyte may be placed. However, it shall be understood that the fact that the sample has already been placed in the sample cells is not a prerequisite for performing the method of extracting the analyte from the sample, that is, the sample can also be loaded into the sample cells as needed (one by one or together) during implementing the method. In some embodiments, when the extraction module includes multiple sample cells, the sample may be loaded into parts of the sample cells before starting the extraction, and then loaded into other sample cells during the extraction process. It should be noted that the terms "cell", "chamber" and "column" may be used interchangeably, which describe the portion of the extraction module described herein for placing the sample, wherein the term "column" (e.g., sample column, packing column, extraction column, etc.) can be used, for example, to describe a sample cell having a cylindrical shape. Alternatively, the sample cells of the present invention can also be in a variety of other suitable configurations and shapes. As shown in FIGS. 1 and 2, a sample cell may include an inlet and an outlet. In addition to the inlet and outlet for communicating with the outside of the sample cell (e.g., a supply pipeline), the sample cell should have a substantially closed structure so that the sample therein does not leak outwardly. Preferably, the inner diameter of the sample cell can be constant.

Typically, the volume (axial or radial dimension) of the sample cell may vary over a wide range. For chemical analysis applications, for example, the volume of the sample cell may be in the range of about 1 to 100 mL, such as 1 mL, 10 mL, 33 mL, 66 mL, etc., but it is not limited to these examples, and it can also have a volume greater than 100 mL. In addition, the inner diameter of the sample cell may be 1/16 inch, for example. It is conceivable that the size of the sample cell may be proportional to the sample used. For example, a 30 g soil sample may be used with a 100 mL sample cell.

Advantageously, the extraction module of the present invention may include one or more extraction channels. In some embodiments, the sample cell may be loaded into the extraction channel (before or during the extraction) or prefabricated into the extraction channel. However, in other embodiments, the sample cell may not be located inside the extraction channel, but may be communicate with it. When the extraction channel is in communication with the sample cell upstream the same, the liquid solvent and the gas may firstly flow through the extraction channel and then flow into the sample cell. However, it should be noted that, when viewed in the flow direction of the fluid, at least a portion of the extraction channel may be located after the sample cell (i.e., located downstream the sample cell), that is, the fluid flowing out of the sample cell may also flow out of the extraction module via the portion of the extraction channel located after the sample cell. Nevertheless, no matter the sample cell is located inside, before or after the extraction channel, when the extraction module of the present invention includes an extraction channel, the sample cell is always in fluid communication with the extraction channel.

In order to improve the extraction efficiency, the sample temperature in the sample cell may be maintained at a suitable extraction temperature, for example about 40-200 °C. Advantageously, the present invention may include a step of heating the sample cell to increase (or maintain as needed after the increase) the temperature (extraction temperature) of the sample cell. However, it is understood that the present invention also does not exclude the case of extraction without heating, that is, extraction at room temperature.

Preferably, the gas preparation system 100 of the present invention, for example the extraction module, may include an extraction heating device or a similar temperature controller. The extraction heating device may include an oven or a heating furnace, into which the sample cell may be loaded, for example, before starting extraction of the sample. Loading the sample cell into the oven may be automatically completed by a robot or a gripper, but it may also be performed manually by an operator. An extraction heating device for example in the form of an oven or the like may rapidly increase the temperature of the sample cell to a target temperature in a short time period, and the temperature control features sound stability. Additionally or alternatively, the extraction heating device may include other forms of heating elements, such as heating wires or heating rods. Preferably, the sample cell can be made of stainless steel, titanium, zirconium and similar materials. Sample cells made of these materials may facilitate heat conduction from an external heat source (via the wall of the sample cell) into the sample cell. In addition, a temperature sensor may be disposed in the extraction heating device to facilitate detection and control of the temperature provided by it.

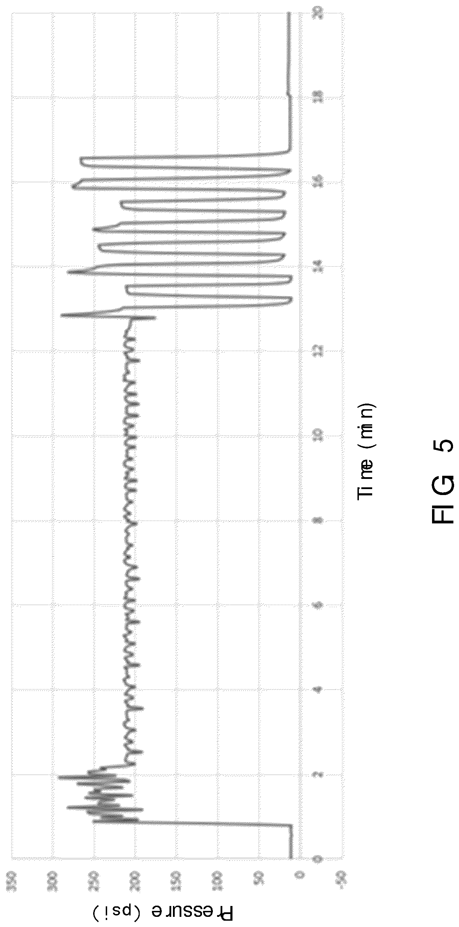

It is also conceivable that when or preferably prior to supplying liquid solvent to the sample cell, the temperature of the liquid solvent that will flows into sample cell is raised by heating, which may help to improve the solubility of analyte in liquid solvent. For example, as shown in FIG. 1, before each of the sample cells 122a-122d, one of the pre-heaters 124a-124d is arranged, such that the liquid solvent is heated by the respective one pre-heater before flowing into the corresponding sample cell, although this is not necessary. The heating temperature of the pre-heater may be higher than the heating temperature of sample cell. In addition, it is also conceivable that the pre-heater is not disposed in close adjacent to the sample cell as shown in FIG. 1 or FIG. 5, but may be arranged at any suitable position on a second supply pipeline, or other positions in the system.

In order to extract the analyte from the sample, it is necessary to supply the liquid solvent required by extraction to the sample cell of the extraction module such that the analyte in the sample may be dissolved in the liquid solvent flowing into the sample cell. As mentioned above, although the solvent for extraction is mainly a liquid solvent, a gas-liquid mixture of the liquid solvent and the gas may flow into the sample cell in the case of gas assistance. That is to say, the method of the present invention may include a supplying step of supplying the sample cell with gas and liquid solvent which solvent can dissolve the analyte in the sample. Here, supplying gas and liquid solvent may refer to supplying gas alone, supplying liquid solvent alone, and supplying a gas-liquid mixture. For example, in the case of gas-assisted solvent extraction, the supplying step may include a first supplying sub-step of supplying the sample cell with a mixture of gas and liquid solvent. It may be understood that the various supplying steps of the present invention may be performed with or without the first supply module to be described in detail below. In other words, the method steps of the present invention may be associated or unassociated with the apparatus, device or element to be described in detail below.

When the analyte is dissolved in the liquid solvent, the liquid solvent containing the analyte may flow out of the sample cell of the extraction module (e.g., through the outlet of the sample cell) for subsequent operations (which will be further explained below). However, it may also be understood that other fluids such as gas (if any) will also flow out of the sample cell during this process.

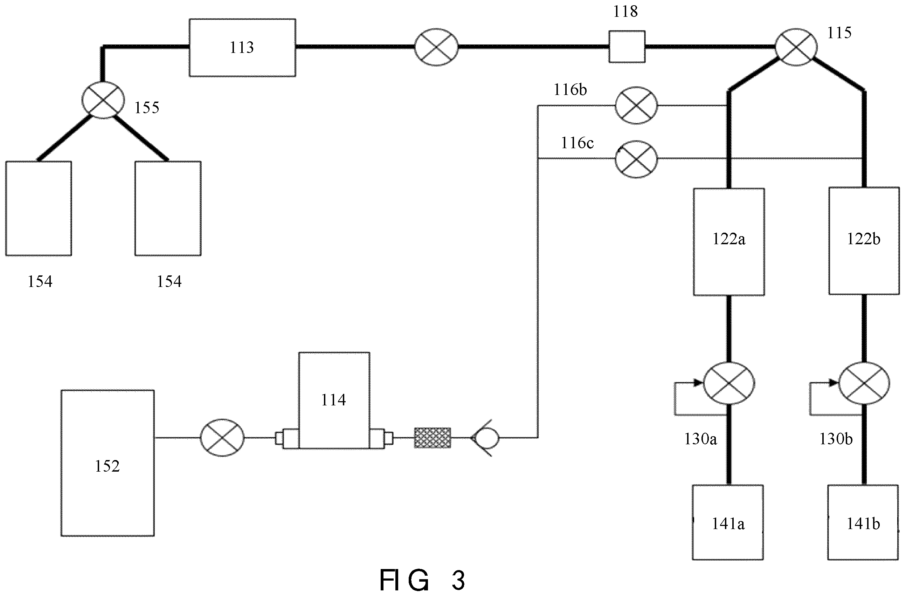

In order to supply fluid, for example, to supply fluid (liquid solvent, gas or a mixture of the two) to the sample cell, the gas preparation system 100 according to the present invention may include a first supply module 110. Here, the term "first supply module" may include any device or component that provides fluids such as liquid solvents and gases. It may be understood that the first supply module 110 of the present invention may include, but may also not include, a solvent source 154 (e.g., a container containing a liquid solvent), a gas source 152 (e.g., a compressed nitrogen cylinder), devices or components directly related to the solvent source 154 and the gas source 152 (e.g., a gas source switch, a filter 153, a pressure sensor 118, a solvent mixing source 155), etc. For example, as shown in FIGS. 2 and 3, a solvent mixing valve for mixing different solvents may also be arranged upstream the solvent pump 113.

In addition, it should be noted that the first supply module 110 of the present invention is not limited to supplying liquid solvents and gases to the extraction module, but may also supply them to other modules or apparatuses (e.g., an evaporation module which will be described in detail below) of the gas preparation system 100 of the present invention. In other words, the first supply module 110 of the present invention may supply liquid solvents, gases, or a mixture of them to other modules or devices other than the sample cell by using at least part of the common pipeline, devices, or components thereof, so as to reduce the overall number of components of the system and optimize sample preparation efficiency.

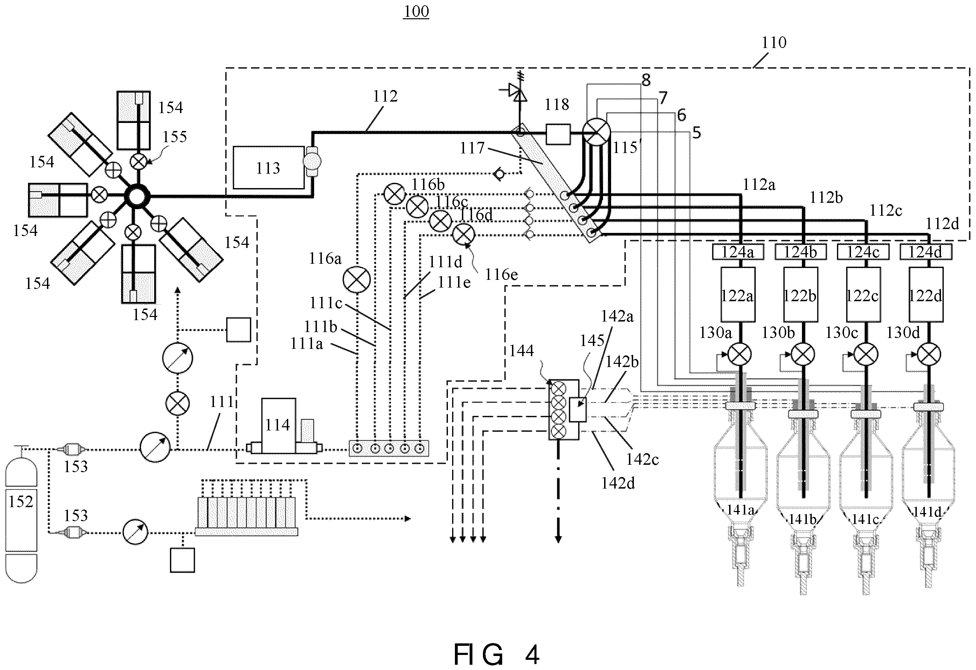

Referring to FIG. 4, the first supply module 110 may include a first supply pipeline 111 for supplying gas. In the present invention, the gas supplied may be nitrogen, air or other suitable inert gas. The first supply module 110 may also include a second supply pipeline 112 for supplying liquid solvent.It is understood that it is not strictly required that the first supply pipeline 111 and the second supply pipeline 112 are respectively dedicated for supplying gas or liquid solvent. Instead, at different stages or different time points of sample preparation, such as extraction, at least a portion of the pipelines may be used for supplying both gas and liquid solvent, for example a common pipeline (which may also be referred to as a mixed supply pipeline depending on the situation) located between a mixing means 117 (described in detail below) and a sample cell, as shown in FIG. 5. In other words, for some pipelines in the first supply module 110, gas flows through at some times, and liquid solvent flows through at other times (see further illustration below for details). In addition, in the embodiment of gas-assisted solvent extraction, some pipelines in the first supply module 110 also supply a mixture of gas and liquid solvent, that is, gas and liquid solvent flow through these pipelines at the same time (which may be called mixed supply pipelines). It should also be understood that the first supply module 110 may include other supply pipelines that are not used to supply liquid solvent or gas.

In addition, in order to quickly increase the extraction temperature, the mixture of gas and liquid solvent may be advantageously preheated to a target temperature ( e.g., 40-200 °C) before entering the sample cell. It may be understood that the temperature of the preheated liquid solvent may be different from the (extraction) temperature of the sample cell. The device for preheating the liquid solvent may be a known structure, so it will not be described in detail in the present invention.

The gas preparation system 100 of the present invention also includes an evaporation module. After the liquid solvent flowing through the sample cell dissolves the analyte in the sample therein, the liquid solvent containing the analyte flows out of the sample cell. The evaporation module may include an evaporation container, such as an evaporation bottle, for receiving the liquid solvent flowing out of the sample cell. As mentioned above, not only the liquid solvent containing the analyte, but also other fluids such as gas may flow out of the sample cell. In any case, the substance flowing into the evaporation container at least includes the liquid solvent containing the analyte. Therefore, the method according to the present invention includes a receiving step of receiving the liquid solvent containing the analyte from the extraction module to the evaporation container.

The liquid solvent containing the analyte may be evaporated in the evaporation container. Therefore, the method of the present invention also includes an evaporating step of evaporating the liquid solvent containing the analyte in the evaporation container. The evaporation process may be controlled by a variety of different factors, such as evaporating to a fixed volume (e.g., several milliliters) or evaporating for a predetermined time (e.g., a predetermined 20 minutes). In some embodiments, a liquid solvent with a larger volume (e.g., 50 milliliters) may be concentrated to a desired volume (e.g., only 2 milliliters). Here, this may preferably be achieved by a combination of a large evaporation bottle and an small evaporation bottle, the small evaporation bottle may be for example a sample vial that may be directly placed in an analyzer such as a gas chromatography-mass spectrometer (GC-MS). In addition, the evaporation module may detect the residual volume of the sample in the evaporation container (e.g., the large and small evaporation bottles) during the evaporation process. For example, the evaporation module may include one or more liquid level sensors for detecting the current liquid level of the sample. The sensors of the present invention communicatively connected to each controller, and the controller (not shown) may store an algorithm for executing the method of the present invention.

According to the present invention, after at least a part of the liquid solvent containing the analyte from the extraction module enters the evaporation container, the evaporation module may be allowed to evaporate the liquid solvent within the evaporation container. Here, "at least a portion" is termed relative to the entire liquid solvent containing the analyte from the extraction module, that is, as long as some of the liquid solvent containing the analyte enters the evaporation container, evaporation may be allowed. Particularly, it should be noted that the term "allowing evaporation" means that the evaporation container may start evaporation (whether continuously or intermittently) as long as it receives the liquid solvent containing the analyte from the sample cell. However, it is important to note that this does not mean that evaporation has to be started when the evaporation container receives the liquid solvent containing the analyte from the sample cell. In other words, the evaporation process may be started as early as the time point when the evaporation container receives the liquid solvent containing the analyte from the sample cell, although the evaporation process may obviously be started later than this time point, for example, the evaporation process may just be started after a predetermined amount of the liquid solvent containing the analyte enters the evaporation container. In some embodiments, evaporation may be started after all the liquid solvent containing the analyte from the extraction module enters the evaporation container (even for example after a predetermined time has passed after the evaporation container receives all the liquid solvent containing the analyte).

In the present invention, the entire liquid solvent containing the analyte refers to the liquid solvent in which the desired amount of the analyte in the sample is dissolved. In other words, "entire" herein does not mean that the theoretically entire amount of the analyte originally contained in the sample is dissolved in the liquid solvent, but only the analyte that may be achieved or expected to be achieved in this extraction process is dissolved in the liquid solvent. It may be understood that due to problems such as dissolution efficiency and the like, it is actually difficult to dissolve all the analytes contained in the sample into the liquid solvent such that they flow into the evaporation container.

In the present invention, the term "evaporation" refers to a physical process of concentrating the volume of a liquid substance (i.e., liquid solvent) by vaporizing it. The evaporation process of the evaporation module may be carried out by means comprising but are not limited to heating, decompression (e.g., vacuuming), blowing (e.g., nitrogen blowing) or any combination thereof. It may be understood that in the present invention, the analyte dissolved in the liquid solvent should generally not or rarely be vaporized by evaporation. Therefore, as the liquid solvent containing the analyte is evaporated by means of the evaporation module, the liquid solvent may be evaporated substantially, thereby obtaining a desired volume of the liquid solvent containing the analyte (also referred to as "concentration"), so as to facilitate the subsequent quantitative analysis of the analyte.

It should be noted that, as emphasized above, evaporation will only start when the evaporation container receives the liquid solvent from the extraction module, and the actions before this moment are not referred to as "evaporation" in the sense of the present invention. For example, before the liquid solvent containing the analyte enters the evaporation container, even if the evaporation container is heated, evacuated or blown, it is not referred to as the start of the "evaporation" process in the sense of the present invention, but as, for example, pre-heating, pre-decompression, pre-ventilation, purification, etc. It may be understood that, considering that there may be a certain time difference between the (start of) supply of liquid solvent or a mixture containing liquid solvent to the sample cell, the (start of) extraction of the analyte from the sample by the liquid solvent, and the (start of) receipt of the liquid solvent containing the analyte from the sample cell by the evaporation container, the present invention stipulates that the evaporation of the liquid solvent in the evaporation container is allowed to start only after the evaporation container receives (at least a part of) the liquid solvent containing the analyte.

As described above, the above mentioned method steps may be controlled by configuring the controller of the present invention. It may be understood that the controller of the present invention may also perform other method steps of the present invention, such as controlling various devices and apparatuses to execute predetermined procedures.

According to the present invention, the extraction module may be selectively in fluid communication with the evaporation module. Specifically, the sample cell of the extraction module may be selectively in fluid communication with the evaporation container of the evaporation module. In some embodiments, the extraction module may include multiple sample cells, and the evaporation module may include multiple evaporation containers. Here, each of the multiple sample cells may be selectively in fluid communication with a corresponding one of the multiple evaporation containers, that is, the sample cell and the evaporation container are in a one-to-one correspondence.

In the present invention, at least during the evaporation process, the evaporation container and the sample cell are in fluid communication. This means that when the liquid solvent in the evaporation container is evaporated, the fluid in the sample cell (not only the liquid solvent, but also other fluids such as gas, if any) may directly enter the evaporation container. That is, the liquid solvent containing the analyte may flow from the sample cell of the extraction module into the evaporation container after start of the evaporation process or during the evaporation process, without being interrupted by the start of the evaporation process or the continuation of the evaporation process. However, it may be understood that the sample cell may also be in fluid communication with the evaporation container before start of the evaporation process or after ending of the evaporation. So far, the method of the present invention may include an evaporating step, that is, evaporating the liquid solvent containing the analyte in the evaporation container, at which time the evaporation module and the sample cell are in fluid communication.

As described above, during the evaporation process, the evaporation container is in fluid communication with the sample cell. That is, the present invention innovatively combines or integrates the extraction module together with the evaporation module, thereby allowing the evaporation container to perform "evaporation/concentration in-situ" or "evaporation/concentration online" of the liquid solvent containing the analyte therein. In other words, in the present invention, it is not necessary to transfer the liquid solvent containing the analyte to the evaporation device to perform the evaporating step after the evaporation container collects the liquid solvent containing the analyte. More advantageously, in some embodiments, the evaporation container includes a combination of a large-volume evaporation bottle and a small-volume evaporation bottle, so that the analyte may be directly concentrated into an evaporation vial that may be directly placed in a quantitative analysis instrument (for example, placed in an analyzer such as a gas chromatograph (GC) or a gas chromatography-mass spectrometer (GC-MS)).

In the prior art, the extraction of the analyte from the sample and its collection in the container and the evaporation/concentration of the liquid solvent containing the analyte are performed independently to each other. Usually, the liquid solvent containing the analyte needs to be transferred to the subsequent evaporation device manually or using additional tools. Different from the prior art, the gas preparation system 100 of the present invention integrates the extraction module together with the evaporation module, avoiding the transfer process of the analyte, thereby saving labor, improving the processing speed, and also avoiding the risk of the analyte coming into contact with the atmosphere or being otherwise contaminated.

As described above, in some embodiments of the present invention, the evaporation process may be started after the entire liquid solvent containing the analyte enters the evaporation container of the evaporation module from the sample cell of the extraction module, but even this embodiment is still completely different from the prior art, because the evaporation container is maintained in fluid communication with the sample cell during the evaporation process, which allows the possibility of receiving extracts from multiple extraction processes into the evaporation container for evaporation. For example, after the entire liquid solvent containing the analyte is in the evaporation container and when it is evaporated, a new sample may be loaded into the sample cell, thereby improving the flexibility of the system. Even if it is planned not to continue the extraction, such an integration also retains the possibility of allowing fluids such as gas to be redirected to the evaporation module via the extraction module. For example, at least a part of the devices, pipelines, etc. that perform the functions of blowing (for example, nitrogen blowing), ventilation, flushing, purification, etc. to the evaporation container of the evaporation module may be integrated together with the devices and pipelines in the first supply module 110 of the system (that is, sharing a part of the pipelines and/or devices), thereby substantially reducing the number of parts and components and significantly optimizing the overall efficiency of the system.

In some preferred embodiments, while the evaporation container receives the liquid solvent containing the analyte from the sample cell, the liquid solvent in the evaporation container is evaporated. However, it may be understood that the entire evaporation process is not required to completely overlap with the extraction process, but the evaporation process may partially overlap with the extraction process. In some other embodiments, it may be allowed that the evaporation container starts to receive the liquid solvent containing the analyte from the sample cell after the extraction is completed, and the evaporation of the liquid solvent may be started during or after the evaporation container receives it.

In addition to the evaporation container, the evaporation module may also include one or more devices for evaporating the liquid solvent, such as an evaporation heating device for facilitating heating of the evaporation container to achieve a controlled evaporation process by increasing the temperature. If the evaporation module includes multiple evaporation containers, these evaporation containers may be arranged in one temperature controller, although each evaporation container may also be provided with an independent evaporation heating device or element, such as a heating wire, a heating rod, a heating cartridge, etc.

For another example, the evaporation module may also include a suction (vacuum) device for decompressing the interior of the evaporation container, so as to increase the evaporation area or reduce the liquid surface pressure, thereby accelerating the vaporization of the liquid solvent in the evaporation container. In this case, the evaporation module includes suction pipelines or vacuum pipelines leading into the evaporation container, the suction pipelines or vacuum pipelines are connected to a suction device (e.g. a vacuum pump, a vacuum generator, etc.) located outside the evaporation container. The evaporation module may also be provided with a pressure sensor or a vacuum sensor 145 on the suction pipelines or the vacuum pipelines or in the evaporation container to monitor the real-time vacuum degree in the evaporation container.

In order to accelerate the evaporation process of the solvent, the evaporation module may also include a blowing or aerating device. The blowing or aerating device is configured to blow or aerate a gas, such as an inert gas, into the liquid solvent of the evaporation container through a pipeline, such that the surface area of the liquid solvent is increased, thereby significantly increasing the evaporation rate under the same conditions (the same temperature, container cross-sectional area and other factors affecting evaporation). As described above, in addition to supplying to the sample cell, the first supply module 110 of the present invention may also use at least part of the common pipeline, devices or elements thereof to supply gas, such as nitrogen for nitrogen blowing, to the evaporation module, and primarily to the evaporation container thereof. Thus, a separate gas source 152 and part of the gas pipelines for evaporation may be omitted. When the gas pipeline is shared, the gas, such as nitrogen may firstly flow into the sample cell through the first supply pipeline 111, and then flow into the evaporation container of the evaporation module through the extraction module, although it may also flow into the evaporation container through a part of the first supply pipeline 111 and another part of the pipeline dedicated to the evaporation container, as shown in FIG. 5 (as will be further explained below).

The first supply module 110 may include a solvent pump 113 for pumping liquid solvent. For example, the solvent pump 113 may provide a pumping flow rate of 0.5-80 mL/min. In some embodiments, the solvent pump 113 may have a first operational configuration and a second operational configuration. In the second operational configuration, the solvent pump 113 does not work, so no liquid solvent is pumped to the extraction module, while in the first operational configuration, the solvent pump 113 operates, thereby pumping the liquid solvent. However, it may be understood that in the first operational configuration, it is also possible that the liquid solvent is not supplied to the sample cell of the extraction module, because the first supply module 110 also includes a device for selectively opening and closing the flow path between the solvent pump 113 and the extraction module, such as a switching valve 115, or other switching means.

Typically, the solvent pump 113 may pump the liquid solvent at a relatively stable flow rate, which may be preset or may be regulated online by the user. In addition, the first supply module 110 may also be provided with other valves between the solvent pump 113 and the switching valve 115 (for example, see FIGS. 1 to 3) to flexibly regulate the fluid on and off of the second supply pipeline 112 or further regulate the flow rate of the liquid solvent.

It is conceivable that during switching between the respect sample cells by means of the switching valve 115, the solvent pump 113 may be placed in the first operational configuration for a short time to avoid high pressure caused by passage blockage during switching of the switching valve 115. However, the solvent pump 113 may also be maintained in the second operational configuration during this process to ensure that the liquid solvent flowing into the switching valve 115 is uninterrupted.

In order to supply the sample cell with a mixture of liquid solvent and gas, the first supply module 110 may also include a mixing means 117 for mixing the gas with the liquid solvent. In some embodiments, the mixing means 117 is configured as a fluid connector (see FIG. 4), which includes separate inlets for allowing the liquid solvent and the gas to enter and an outlet for allowing the mixed mixture to flow out. However, in other embodiments, the mixing means 117 may be in other configurations, such as a fluid component, e.g. a valve or manifold. It may be understood that the mixing means 117 of the present invention may also be implemented as a generalized mixing component. For example, a first supply pipeline 111 for supplying gas and a second supply pipeline 112 for supplying liquid solvent may be merged into one mixing pipeline, but it is not need to be a dedicated mixing device. For example, none of FIGS. 1 to 3 shows a dedicated mixing means, but they only show the merger or confluence of the first supply pipeline 111 and the second supply pipeline 112 (that is, the pipeline portion at the merger or confluence may be referred to as a mixing means).

The extraction efficiency of extracting the analyte from the sample cell depends on multiple factors. The main factors include pressure, temperature, flow rate, etc. For gas-assisted liquid solvent extraction, the present invention may maintain the pressure in the sample cell more stably (i.e., pressure stability during extraction) to better ensure that the liquid solvent (for example, in the mixture) always remains in a liquid state at a set extraction temperature, so as to avoid obvious evaporation of the liquid solvent and actual loss of the liquid solvent, thereby further improving the extraction efficiency. In addition, the mixing between gas and liquid solvent also needs consideration on the effect of the mixing ratio on the extraction performance. The present invention may provide a more stable mixing ratio of liquid solvent to gas (i.e., a more precisely controlled mixing ratio) to ensure sufficient mixing of gas and liquid as much as possible during the actual supply process, to generate positively effects on extraction performance.

### Regulation device

During the extraction process, especially during the gas-assisted solvent extraction process, it is necessary to keep the pressure in the sample cell as stable as possible. For example, the liquid solvent needs to maintain its liquid phase in the sample cell, otherwise the efficiency of the solvent extraction will be significantly lowered. When the pressure in the sample cell may be maintained at a relatively high preset pressure, it may ensure that the liquid solvent is not vaporized in the sample cell.

To this end, the gas preparation system 100 of the present invention may include a regulation device. The regulation device may be arranged between the extraction module and the evaporation module, specifically on the flow path between the sample cell and the evaporation container. More precisely, the regulation device may be in fluid communication with the sample cell and the evaporation container, respectively. Therefore, in some embodiments, selective fluid communication between the sample cell and the evaporation container may be achieved by means of the regulation device, but it is also conceivable that such selective fluidic communication may be achieved by other devices (if any) between the sample cell and the evaporation container. Advantageously, the regulation device may be driven by an actuating device, such as a stepping motor.

The regulation device of the present invention has an inlet which may be in communication with the sample cell, and an outlet which may be in communication with the evaporation container, and a flow path between the inlet and the outlet is formed inside the regulation device. Fluid (such as liquid solvent, gas or a mixture of them) may flow from the inlet through the flow path inside the regulation device and out from the outlet. In the present invention, the cross-sectional dimension (or indicated by a relative value of the size) of the part of the flow path from the inlet to the outlet where the cross-section can be varied is referred to as the "opening degree" of the regulation device. For example, when the cross-sectional dimension is a maximum value that can be achieved, the opening degree may be termed as maximum, and when the cross-sectional dimension is zero (i.e., the flow path does not open), the opening degree may be termed as minimum. The opening degree of the regulation device may be varied between the maximum opening degree (100% opening degree) and the minimum opening degree (0 opening degree). When the pressure in the sample cell is relatively stable, the opening degree of the regulation device is stabilized near a certain equilibrium position, which is between the maximum opening degree and the minimum opening degree.

The regulation device may have an operating mode and a non-operating mode. In the non-operating mode of the regulation device, the opening degree of the regulation device is maximum, such that the sample cell and the evaporation container may always be in fluid communication. This mode allows the fluid to pass quickly through the sample cell at a maximum flow rate, such as when supplying purge gas to the sample cell for purging. In the operating mode of the regulation device, the opening degree of the regulation device is variable. Specifically, the regulation device may regulate its opening degree based on the pressure in the sample cell, and then the pressure in the sample cell may be maintained within a preset range by the change in the opening degree. The preset range of pressure is for example a pressure range with a floating of 1%-5% around a preset pressure value in the range of 200-400 psi, especially 300-350 psi (see FIG. 5, for example, 200 psi).

In addition, it may be understood that by regulating the opening degree "based on" pressure, the present invention means that the pressure in the sample cell is one of the determining factors for regulating the opening degree of the regulation device, but it does not exclude that the opening degree may also be regulated based on other factors besides the pressure in the sample cell. That is, "based on" refers to open-ended influencing factors, but not necessarily be the only influencing factor.

Specifically, when the pressure in the sample cell is relatively stable, the opening degree of the regulation device is also substantially stable at its equilibrium position. When there are fluctuations in the pressure in the sample cell, for example, when the pressure in the sample cell suddenly increases, the pressure at the inlet of the regulation device also increases due to communication with the sample cell, and this increase in pressure causes the opening degree of the regulation device to increase, while the increase in the opening degree of the regulation device results in less resistance for flow through the regulation device, i.e., a larger flow volume, which may reduce the pressure (resistance) of the flow path, which in turn reduces the pressure in the sample cell, thereby balancing the sudden pressure fluctuations described above. Conversely, if the pressure in the sample cell decreases, the opening degree of the regulation device will also decrease, which increases the pressure (resistance) of the flow path, thereby increasing the pressure in the sample cell again.

Thus, the regulation device of the present invention can provide a negative feedback for the pressure fluctuation in the sample cell so as to return it to its stable pressure as soon as possible. In other words, even if there are fluctuations in the pressure in the sample cell, due to this negative feedback mechanism, the pressure may float up and down within a very small range around a certain pressure value without exceeding the preset range, thereby achieving the desired pressure stability. Therefore, in the working mode of the regulation device, the regulation device may not only allow the flow path between the sample cell and the evaporation container to be turned on or off, but more importantly may stabilize the pressure in the sample cell within a relatively small preset range. It is particularly advantageous that the regulation device may maintain the pressure in the sample cell within a range of preset pressure, especially a relative high pressure (for example, 200-500 psi, particularly 220-300 psi) with a floating up and down of 1%, 2%, 3%, or 5%.

The regulation device may include a pre-loaded assembly that provides a pre-definable resistance. In some embodiments, the pre-loaded assembly may be configured as a diaphragm assembly, such as an elastic membrane. Preferably, the resistance provided by the pre-loaded assembly can be regulated (for example, by regulating the tension of the diaphragm assembly). When the regulation device is in its working mode, after the pressure in the sample cell reaches a first preset pressure determined by the pre-loaded assembly, the flow path between the inlet and the outlet may be turned on (that is, the sample cell may be in fluid communication with the evaporation container), that is, the opening degree of the flow path is not zero. In a preferred embodiment, gas may be supplied to the sample cell before start of supplying the liquid solvent. Since the regulation device is not turned on, the pressure in the sample cell may be quickly increased to a preset back pressure.

The pre-loaded assembly may be moved between a blocking position for blocking the flow path and a non-blocking position for releasing the flow path, preferably along an axial direction of the regulation device. Advantageously, the regulation device is arranged such that its axial direction is perpendicular or approximately perpendicular to the extension direction of the flow path where the regulation device is located. It should be noted that the blocking position is usually a unique position (i.e., the position where the opening degree is zero), while the non-blocking position can be various positions of different opening degrees. In addition, as described above, when the pressure in the sample cell is relatively stable, the opening degree of the regulation device is also substantially stable at its equilibrium position. Therefore, the pre-loaded assembly is also at a certain equilibrium position to provide a stable opening degree. The pressure fluctuation in the sample cell described above causes the pressure fluctuation at the inlet of the regulation device, and therefore, this pressure fluctuation will break the balance between the pressure at the inlet when the pressure is stable (or the pressure difference between the inlet and the outlet) and the pre-loaded resistance provided by the pre-loaded assembly (for example, the elastic force that may be provided by the diaphragm assembly).

In some embodiments, the regulation device may include a first valve body portion (e.g., located in an axially lower position), a second valve body portion (e.g., located in an axially upper position), and a cavity defined by the two valve body portions (e.g., an axial cavity). Here, the inlet and outlet of the regulation device are both disposed on the first valve body portion. The pre-loaded assembly of the regulation device may be supported in the cavity, and may be moved between a blocking position for blocking the flow path and a non-blocking position for releasing the flow path. In some embodiments, both ends of the diaphragm assembly are supported, and the middle part thereof is suspended in the cavity. According to the present invention, the opening degree may be defined by the space between the pre-loaded assembly and the first valve body portion (e.g., located axially below the pre-loaded assembly), such as the axial height of the space. Alternatively, the inlet and outlet of the regulation device may also be arranged on different valve body portions.

In addition, in order to facilitate the evaporation container to receive the liquid solvent containing the analyte from the sample cell, a delivery needle interface or a dispensing needle interface may be used between the regulation device and the evaporation container to facilitate transferring and receiving the fluid from the sample cell to the evaporation container. Such a delivery needle interface or dispensing needle interface may provide the function of sealing the evaporation container to avoid contamination and loss of the analyte, and may also provide a path for transferring vacuum to the evaporation container.

### Gas flow controlling device

In the gas-assisted solvent extraction technique, since a mixture of liquid solvent and gas needs to be supplied to a sample cell, it is advantageous to (especially continuously) control the gas-liquid mixing ratio of liquid solvent and gas. If the gas-liquid mixing ratio is not appropriate, this can lead to uneven gas-liquid mixing, thereby causing an undesired decrease in the extraction efficiency in the sample cell. However, since pressure pulsations are actually generated in the supply pipeline during the process of supplying the fluid, it is impossible to precisely control the gas-liquid mixing ratio in the sample cell.

In order to solve this problem, the supplying step of the method of the present invention may include supplying gas with a preset flow rate to the sample cell during the supply of the mixture of gas and liquid solvent, to mix the gas with the liquid solvent. Preferably, the first supply module 110 of the gas preparation system 100 may include a gas flow controlling device 114, by means of which gas with a preset flow rate (e.g., 1-200 mL/min) will be supplied to be mixed with the liquid solvent during the supply of the mixture of gas and liquid solvent. Of course, the present invention may also realize the above-mentioned supplying step by means of other devices.

The gas flow controlling device 114 may be arranged on the first supply pipeline 111, or may be in fluid communication with the first supply pipeline 111. The gas flow controlling device 114 may include an inlet and an outlet, wherein the inlet may be in communication with the gas source 152, and the outlet may be in communication with the extraction module. Generally, the inlet pressure of the gas flow controlling device 114 is higher than the outlet pressure. In the case where the regulation device described above is provided, the outlet pressure of the gas flow controlling device 114 may also be maintained within a stable preset range (e.g., 220-300 psi). Since the gas source 152 preferably provides pressurized gas, the inlet pressure of the gas flow controlling device 114 is generally high, such as 250-400 psi, particularly 300-350 psi.

The gas flow controlling device 114 may include a flow control mode, in which a continuous and stable gas flow may be provided to the sample cell. Since the gas flow is maintained stable, the gas in the mixture of the liquid solvent and gas will also occupy a stable proportion. This can make the mixing of gas in the mixture, that is, the mixing of gas into liquid solvent, uniform. In this way, in the mixture entering the sample cell, the liquid solvent and the gas may increase convective and diffusive mass transfer efficiencies, thereby shortening the extraction time, further improving the overall mass transfer properties of the liquid solvent, and increasing the extraction rate of the analyte.

In addition, the stable gas flow provided by the gas flow controlling device 114 of the present invention can itself be preset by the user, thereby allowing to regulate it to a desired gas-liquid mixing ratio during the gas-assisted solvent extraction process, thereby optimizing the extraction performance.

Furthermore, in the case where the extraction module includes multiple sample cells, if the mixture of liquid solvent and gas is to be supplied to the respective sample cell sequentially, the mixture (flow) may be unevenly distributed or unbalanced in each sample cell. By providing the gas flow controlling device 114 of the present invention, the problem of uneven flow among the respective sample cells may be effectively solved as the gas flow controlling device 114 may always maintain the supplied gas flow at a preset flow. Of course, it may be understood that the preset flow also allows a very small floating range, such as 1-5 %.

In addition, the gas flow controlling device 114 may also include a fully open mode. The fully open mode may be applied to a stage of quickly raising the pressure in the sample cell before supplying the gas-liquid mixture. As described above, being at a higher pressure in the sample cell is a key factor in maintaining the liquid solvent in a liquid phase at high temperatures. Quickly raising the pressure in the sample cell (e.g., to a certain pressure value between 200-500psi) may eliminate the loss of liquid solvent due to possible vaporization, because such a high pressure will directly increase the boiling point of most organic solvents, thereby maintaining the liquid solvent in the sample cell in the liquid phase.

It is understood that once the desired high pressure appears in the sample cell, the gas flow controlling device 114 may be changed from the full open mode (automatically or manually) to the flow control mode to facilitate the auxiliary work of the gas, but this change may also be performed automatically or manually under other conditions (e.g., a preset time). In some embodiments, when the liquid solvent in the sample cell reaches a preset amount (e.g., a preset volume), the gas flow controlling device may be changed from the full open mode to the flow control mode.

In order to optimize the extraction efficiency, the extraction module of the present invention may include multiple sample cells (e.g., two, four, eight sample cells). In addition, in order to simultaneously improve the overall sample preparation efficiency, the evaporation module of the present invention may also include multiple evaporation containers (e.g., two, four, eight evaporation containers). As described above, each one of the multiple sample cells may be selectively in fluid communication with a corresponding one of the multiple evaporation containers. Preferably, the sample preparation device of the present invention may also include multiple regulation devices, where a regulation device is arranged between each sample cell and a corresponding evaporation container.

In the present invention, no matter it is performed sequentially or simultaneously, supplying liquid solvent, gas or a mixture of the two to multiple sample cells may be referred to as multi-path supply, dissolving the analytes in the samples into the liquid solvent in multiple sample cells may be referred to as multi-path extraction, and evaporating the liquid solvent containing the analytes in multiple evaporation containers may be referred to as multi-path evaporation. The expression "multi-path" is to distinguish from the situation of supplying only to a single sample cell, extracting in a single sample cell, and evaporating the liquid solvent in a single evaporation container. By means of a multi-path setting, the same apparatus can meet the needs of users with different process amount.

Advantageously, the extraction module may include multiple extraction channels, and each sample cell is in communication with one of the multiple extraction channels. In some embodiments, one sample cell is placed in one extraction channel, and the one extraction channel and the one sample cell therein are selectively in fluid communication with one evaporation container. However, it is noted that even if the extraction module is not provided with multiple extraction channels associated with multiple sample cells, the "multi-path extraction" process may still be referred to as "multi-channel extraction", which means that multiple sample cells may be extracted (whether sequentially or simultaneously). That is, the meaning of the term "multi-channel" in the present invention is similar to "multi-path", and there is not necessarily a physical channel. Similarly, even if the evaporation module does not have an evaporation channel corresponding to the evaporation container, the multi-path evaporation process for evaporating multiple evaporation containers may still be referred to as multi-channel evaporation. In addition, in the present invention, the term "sequentially" refers to one after another or in accordance with a (for example, predetermined) order. Advantageously, the predetermined order (that is, the order of which gas, liquid solvent or gas-liquid mixture is supplied to multiple sample cells) is unchanged among different supply cycles, because this may make the extraction conditions of each sample cell as consistent as possible, thereby improving the recovery rate. In the present invention, multi-channel extraction, multi-channel evaporation or in particular a combination of them may be performed. In some embodiments, in order to perform multi-channel extraction, the liquid solvent may be supplied to each sample cell sequentially, although the liquid solvent may also be supplied to multiple sample cells simultaneously. Although supplying each sample cell with liquid solvent at the same time may achieve a larger throughput, filling each sample cell with liquid solvent sequentially (also referred to as intermittent supply or filling) may be beneficial to faster solvent balance and higher extraction recovery rate. It may be understood that the method of the present invention may automatically or manually switch between supplying liquid solvent or mixture of liquid solvent and gas to each sample cell at the same time and supplying it to each sample cell sequentially, thereby improving the flexibility of operation.

Specifically, compared to a continuous solvent flow through each extraction channel or each sample cell, the intermittent delivery of the liquid solvent allows a faster equilibration time to a predetermined extraction temperature and a more efficient extraction of the analyte. It is noted that in the case of sequential supply, there is a static extraction time since when one sample cell is supplied with liquid solvent, the other sample cells are not supplied with liquid solvent. In the present invention, the term "static extraction time" refers to the time when the liquid solvent is not supplied to the sample cell. However, it may be understood that the static extraction time does not necessarily mean that the liquid solvent does not flow through the sample cell and into the evaporation container, but it only means that the liquid solvent is not supplied to the sample cell during the static extraction time.

In this case, at least during the process of supplying the sample cell with a mixture of liquid solvent and gas, it is preferred to include multiple supply cycles or multiple supply circulations. In each supply cycle of the multiple supply cycles, the gas-liquid mixture is sequentially supplied to each sample cell of the multiple sample cells. In an example, in the case of four extraction channels (i.e., four sample cells), the time duration of a supply cycle is 60 seconds, and preferably liquid solvent or a mixture of liquid solvent and gas may be sequentially supplied to each sample cell for 15 seconds. That is, after a sample cell is supplied with liquid solvent or gas-liquid mixture for 15 seconds, the system will switch to the next sample cell for supply. In this example, each sample cell will generate a static extraction time of three quarters of the time period in a supply cycle. It may be understood that the time period for supplying each sample cell may not be the same 15 seconds, for example, one sample cell may be supplied for 10 seconds, and another sample cell may be supplied for 20 seconds, and so on.

However, it should be noted that, for the convenience of expression, it is prescribed in the present invention that a supply cycle in which the gas-liquid mixture (or only the liquid solvent, or only the gas) is not sequentially supplied to each sample cell does not belong to one of the multiple supply cycles described above, and a sample cell that is not supplied with the gas-liquid mixture does not belong to one of the multiple sample cells described above. In other words, the present invention does not exclude the case that the gas-liquid mixture is not sequentially supplied to each sample cell in other supply cycles, nor does it exclude the existence of a sample cell that does not supply the gas-liquid mixture, but these supply cycles do not belong to one of the multiple supply cycles described above, and these sample cells do not belong to one of the multiple sample cells described above.

In the case of unchanged supply volume, compared with an embodiment including only one supply cycle (i.e., supplying a sample cell with a desired entire amount of liquid solvent and then switching to the next sample cell for supply only), the use of multiple supply cycles may better ensure uniform extraction conditions among the various sample cells. Multiple supply cycles may keep the static extraction time of each sample cell substantially consistent, and the static extraction time is shortened. In addition, by increasing the frequency of switching among the various sample cells, the difference in temperature change of each sample cell or each extraction channel during extraction may be minimized. It should also be noted that since the liquid solvent or its gas-liquid mixture is intermittently supplied among the various sample cells (i.e., there is the static extraction time described above), there are conditions for changing the liquid solvent, in order to change the extraction conditions as needed, providing overall flexibility of the system.

Advantageously, the time duration of supplying the gas-liquid mixture to each sample cell in the same supply cycle is equal, that is, the time duration of the supply is evenly divided among the respective sample cells. However, the present invention is not limited thereto, and the time duration of supplying the gas-liquid mixture to each sample cell may also be different among the sample cells, or at least partially different, but the same time duration is preferred. Also advantageously, the supply amount (e.g., mass, volume or flow) of the gas-liquid mixture supplied to each sample cell in the same supply cycle is equal. That is, an equal amount of gas-liquid mixture is supplied to each sample cell in one supply cycle. However, the present invention is not limited thereto, and the supply amount of the gas-liquid mixture supplied to each sample cell may also be different among the respective sample cells, or at least partially different among the sample cells, but an equal amount of supply is preferred. Of course, when the flow rate of the supplied mixture remains unchanged, if the time duration of the supply is the same, it means that the supply amount is also the same.

In addition, in different supply cycles, the amount of the mixture supplied to each sample cell or the supply time duration may be the same or different. Preferably, the total time duration of each supply cycle or the supply time or supply amount of each sample cell in each supply cycle under the condition of equal supply is kept small (e.g., 10 seconds, 15 seconds, 20 seconds, etc.) to reduce the disadvantage of the recovery rate drop caused by the uneven increase of the extraction temperature.

In the present invention, the amount of liquid solvent supplied to (each) sample cell may be regulated by the user or may be preset. For example, a volume of liquid solvent equivalent to 20%-80%, particularly 30%-70% of the volume of the sample cell may be supplied to the sample cell. In some cases, the larger the amount (e.g., the larger the volume) of liquid solvent supplied to the sample cell, the better the extraction recovery rate is.

In order to sequentially supply liquid solvent or a mixture of liquid solvent and gas to the sample cell, the first supply module 110 of the present invention may include a switching valve 115 (e.g., a multi-way rotary valve), which is in communication with the second supply pipeline 112. The switching valve 115 may have multiple operational configurations, each of which may be used to direct the liquid solvent to flow to a corresponding sample cell of the multiple sample cells in a corresponding time period of each supply cycle. It may be understood that the time consumed by the switch between the multiple operational configurations itself is extremely short, and the switch time between the multiple supply cycles is also extremely short, and therefore may be ignored. Here, the term "corresponding time period" refers to the time period or time duration associated with the corresponding sample cell to be directed in the supply cycle.

It may be understood that in some embodiments, only the liquid solvent may flow through the switching valve 115, that is, the gas and the liquid solvent are mixed downstream the switching valve 115 (for example, see FIG. 3). Thus, it is possible to avoid that the durability of the switching valve 115 is affected by the gas-liquid mixture flowing through the switching valve 115. However, in other embodiments, the gas and the liquid solvent may be mixed upstream the switching valve 115 such that the gas-liquid mixture flows into the sample cell via the switching valve 115 (for example, see FIG. 2).

In some embodiments, the switching valve 115 may include a first port in communication with the second supply pipeline 112 or the solvent pump 113 (upstream thereof), and may also include multiple ports in fluid communication with the multiple sample cells respectively. The liquid solvent may flow into the switching valve 115 from the first port, and then flow to the sample cell via one port of the above-mentioned multiple ports, so as to achieve the switch of the flow path of the liquid solvent. In this case, the operational configuration may refer to a state in which the first port of the switching valve 115 is in fluid communication with one of the multiple ports. Multiple operational configurations may refer to multiple states in which the first port of the switching valve 115 is respectively in fluid communication with the multiple ports. Of course, the present invention is not limited to this, and it is also conceivable that other states of the switching valve 115 constitute the above-described operational configuration.

For example, in the first time period of the supply cycle, the switching valve 115 may be in its first operational configuration to supply liquid solvent (or a mixture thereof with gas) to the first sample cell 122a of the multiple sample cells, and in the second time period immediately following the first time period of the supply cycle, the switching valve 115 may be in its second operational configuration to supply liquid solvent (or a mixture thereof with gas) to the second sample cell 122b of the multiple sample cells, and similarly in the subsequent third and fourth time periods of the same supply cycle, liquid solvent (or a mixture thereof with gas) is supplied to the third and fourth sample cells. That is, the switching valve 115 may be in the third and fourth operational configurations. If there are multiple supply cycles, after supplying liquid solvent (or a mixture thereof with gas) to the last sample cell of the multiple sample cells in the last time period of the previous supply cycle, the first time period of the next supply cycle is continued, returning to supplying liquid solvent (or a mixture thereof with gas) to the first sample cell 122a. And so on, until all the predetermined supply cycles or supply circulations are completed.

Compared with providing a switching means or a valve for each sample cell, using the switching valve 115 to switch among the sample cells may also reduce the number of parts.

In order to sequentially supply gas or a mixture of liquid solvent and gas to the sample cell, the first supply module 110 of the present invention may include a switching means. In the context of the present invention, the switching means may allow or prevent the fluid from passing therethrough to realize the on-off of the flow path passing therethrough. In the case where the extraction module includes multiple sample cells, the first supply module 110 of the present invention has, on the one hand, a first supply pipeline 111 including multiple branch pipelines, and on the other hand, multiple switching means corresponding to the multiple branch pipelines. Advantageously, each of the multiple switching means is in communication with a corresponding branch pipeline of the multiple branch pipelines (for example, as shown in FIG. 3, each switching means is arranged on one branch pipeline), such that this branch pipeline is selectively in fluidic communication with a corresponding sample cell of the multiple sample cells. As shown above, the switching means 116 may realize directing the gas flow to a corresponding sample cell of the multiple sample cells in the corresponding time period.

In some embodiments, in the first time period of the supply cycle, the second switching means 116b on the second branch pipeline 111b in the first supply pipeline 111 allows fluid to flow therethrough to supply gas (or a mixture thereof with a liquid solvent) to the first sample cell 122a of the multiple sample cells. In the second time period immediately following the supply cycle, the third switching means 116c on the third branch pipeline 111c in the first supply pipeline 111 allows fluid to flow through it (at this time, the first switching means prevents fluid from flowing therethrough) to supply gas (or a mixture thereof with a liquid solvent) to the second sample cell 122b of the multiple sample cells. Similarly, in the subsequent third and fourth time periods of the same supply cycle, gas (or a mixture thereof with a liquid solvent) is supplied to the third sample cell 122c and the fourth sample cell 122d. If there are multiple supply cycles, after supplying gas (or a mixture thereof with liquid solvent) to the last sample cell of the multiple sample cells in the last time period of the previous supply cycle, then continuing to the first time period of the next supply cycle, returning to supplying gas (or a mixture thereof with liquid solvent) to the first sample cell 122a. And so on, until all the predetermined supply cycles or supply circulations are completed.

Although the switching means may be configured as a valve, it may also be other known mechanical structures capable of on-off switching. However, it may be understood that the switching means is not limited to being implemented to only perform the function of switching on or off flow path, for example, it may also be a device capable of regulating opening degree, which will not be described in detail here. It should be noted that the gas supplying step according to the present invention may also be performed without the aid of the above-described switching means.

In addition, the present invention may also envision using the switching valve 115 to achieve sequential purging of the sample cells. In this case, it is necessary to fluidly communicating the first supply pipeline 111 for supplying gas to the switching valve 115 (the first branch pipeline 111a of the first supply pipeline 111 as shown in FIG. 4 may be in communication with the switching valve 115), such that the gas used as purge gas flows from the first supply pipeline 111 to the sample cell via the switching valve 115, that is, flows sequentially to each sample cell. At this time, the gas flow controlling device 114 may be in the full-open mode as described above, and the regulation device is in its non-operating mode (maximum opening degree) to reduce the flow resistance difference on each branch pipeline, thereby promoting almost the same purging of each sample cell. Further, instead of using multiple switching means (e.g., the first to fourth switching means) in communication with the first supply pipeline 111, the present invention may also realize the sequential gas supply to the extraction module and/or the evaporation module by means of a combination of the first supply pipeline 111 and the switching valve 115 to achieve the desired cleaning, purification, aeration and other functions.

Corresponding to the multi-path or multi-channel extraction, multi-path evaporation may be performed online. As described above, "multi-path" does not mean that the evaporation module has multiple evaporation channels, but means that there are multiple evaporation containers, and these multiple evaporation containers may undergo evaporation simultaneously or sequentially. It may also be understood that in the present invention, multi-path evaporation may not be combined with multi-path extraction. For example, multi-path extraction may be performed, but the liquid solvent containing the analyte from multiple sample cells all flows into the same evaporation container (i.e., single-path evaporation) or into evaporation containers of different numbers. Alternatively, the extraction is single-channel, but the liquid solvent containing the analyte from the same sample cell may also flow into multiple evaporation containers and evaporate simultaneously or in a predetermined order. However, the combination of multi-path evaporation and multi-path extraction is a preferred embodiment of the present invention.

In the case of multi-path evaporation, when evaporation is performed by reducing pressure, for example, vacuum may be provided by an external vacuum pump, and may be transferred to the evaporation container by using a vacuum manifold, which may allocate vacuum paths for the corresponding multiple channels, that is, each vacuum pipeline of the first to fourth vacuum pipelines is preferably equipped with a vacuum valve 144 to control the evaporation process separately. These vacuum valves 144 are necessary for evaporating a fixed volume, but for general evaporation, these vacuum valves may not be needed.

In the case of multi-path evaporation, when evaporation is performed by heating, the heating of the evaporation container is heat conduction or microwave heating or other known means of heating. The evaporation module includes a first heating device to evaporate the liquid solvent containing the analyte located therein by heating the evaporation container. In the case of multi-path evaporation, the number of first heating devices may be determined by the number of evaporation containers. In addition, the first heating device may also be controlled individually by each evaporation container.

In the case of multi-path evaporation, when evaporation is performed by blowing or aerating, the blowing to the multiple evaporation containers may be a gas flow provided by an external gas source 152. The external gas may be distributed to the corresponding evaporation containers by a shunt. As described above, the gas used for blowing may come from the same gas source 152 as that supplies the gas to the sample cell, and multiple branch pipelines of the above-described first supply pipeline 111 may also be used. Preferably, regardless whether the pipeline is shared for supplying gas to the sample cell, each branch gas pipeline may be individually controlled by a valve that may turn on and off the gas flow.

The integrated process of extraction and evaporation is illustrated below by an example. However, it should be noted that the illustrated process is merely exemplary, e.g., the device, parameters, and even some of the steps employed therein are exemplary or optional.
1) A device is initialized, so that the controller and the individual devices of the present invention enter a working state.
2) A sample (e.g., a solid or semi-solid sample) may be loaded into a sample cell. However, it will be appreciated that in other embodiments, the sample may be pre-loaded into the sample cell. Alternatively, at least a portion of the sample may also be loaded into the sample cell, particularly some of the plurality of sample cells, after an extraction process begins.
3) The sample cell may be heated until a target temperature (e.g., a temperature value in the range of 40-200 degrees Celsius) is reached. For example, the sample cell may be loaded into an extraction heating device (e.g., an oven) by an automated pneumatic gantry. Alternatively, it is also possible that the sample cell is already in the extraction heating device, e.g. the extraction heating device may be integrated into an extraction module.
4) A regulation device is set in an operating mode and a gas flow controlling device 114 is set in a fully open mode to pre-fill the sample cell with gas. Thus, the pressure in the sample cell may rapidly increase to a preset pressure. The preset pressure may be between 100-500 psi, such as 220 psi.
5) A liquid solvent is supplied to the sample cell, e.g., by pumping by means of a solvent pump 113. In an embodiment comprising multiple sample cells, each sample cell may be filled with the liquid solvent once. That is, a determined volume of a liquid solvent is filled into the sample cell continuously at a maximum pumping speed, but alternatively, the liquid solvent may be supplied to each of the plurality of sample cells in multiple supply cycles, and the latter is preferred.
6) In the gas-assisted solvent extraction technique, a mixture of a liquid solvent and gas may be supplied to the sample cell at this point. The gas and liquid solvent are mixed well prior to entering the sample cell. The gas flow controlling device 114 may be in a gas flow rate control mode, so that a preset flow rate of gas (in the form of a mixture with the liquid solvent) is supplied to the sample cell (e.g., a preset flow rate of gas may be supplied to mixing means 117 of a first supply module 110).
7) After the liquid solvent containing the analyte flows into the evaporation container from the sample cell (e.g., via the regulating device), the evaporation of the liquid solvent within the evaporation container may be started. For example, the evaporation may be performed by one or more of various means, such as heating the evaporation container, vacuum pumping (e.g., opening a vacuum valve 144), nitrogen blowing (e.g., introducing nitrogen), and the like. Thus, the collected liquid solvent may be quickly vaporized and solvent vapor is transferred to the outside of the evaporation container via a pipeline. Prior to this evaporation process, e.g., when the liquid solvent does not flow into the evaporation container, the evaporation container may also be pre-heated, so that it can reach its operating temperature more quickly when it begins to perform evaporation.
8) After a predetermined amount of a liquid solvent is collected in the evaporation container or after a predetermined evaporation time is elapsed (or also after other predetermined conditions are satisfied), optionally the sample cell is purged with purge gas (e.g., high-pressure nitrogen). At this time, the regulation device is in its non-operational state (with a maximum opening degree) and the vacuum valve 144 of the evaporation module is closed. Thus, a residual analyte that remains in the sample cell can be collected in the evaporation container.
9) After the purge is completed, the regulation device can be reset in the operating mode and evaporation of the liquid solvent in the evaporation container can continue. In embodiments with fixed evaporated volume, a liquid level sensing module constantly records the level of the liquid solvent in the evaporation container (e.g., the evaporation vial).
10) After the evaporation is completed, the sample cell (e.g., each extraction channel) is rinsed by a liquid solvent, e.g., for the next extraction or an organic solvent or distilled water, etc., but this is not necessary. Also, it can be conceivable that the sample cell (e.g., each extraction channel) is washed by gas, in particular high-pressure gas.

Optionally, in embodiments for multi-path extraction, the mixture of the liquid solvent and gas may be supplied to the sample cell during multiple supply periods (e.g., 1-100 supply cycles). In each of the plurality of supply periods, the mixture is enabled to flow into one of the plurality of sample cells and is continually supplied for a corresponding period of time (e.g., 10-60 seconds), and then from the sample cell, the mixture is enabled to flow into the next sample cell (the time duration of the continuous supply may vary, but may be the same) until the supply to all of the plurality of sample cells is completed, and here is a completed supply cycle. The mixture is supplied for multiple supply cycles until a predetermined amount of a gas-liquid mixture is supplied, or until the mixture is supplied for a predetermined time period.

Further optionally, in the process of supplying gas to the sample cells prior to commencing extraction, the gas may be supplied to each of the multiple sample cells in at least one supply cycle. In each supply cycle, the gas may be supplied sequentially to each sample cell. In particular, advantageously, this gas supply process for the sample cells can be combined with the heating process for the sample cells. For example, when a first sample cell 122a of the plurality of sample cells is filled with gas, (only) the first sample cell 122a may be heated. In addition, when a second sample cell 122b of the plurality of sample cells is filled with gas, (only) the second sample cell may be heated, and so on. In a preferred embodiment, for a multiple-channel sample cell, the extraction heating device, e.g., a heating oven, may first start heating (e.g., to a target temperature), then each sample cell is sequentially loaded into the extraction heating device at intervals (e.g., spaced from each other by 15-20 s), so that the points of time at which the gas and liquid solvent are supplied to each sample cell are located at close positions on the ramp-up curve for the sample in the sample cell, thereby obtaining relatively more consistent extraction conditions.

As noted, the above-mentioned method and apparatus of the present invention can be easily expanded from single path to multiple paths, and from two channels to four or eight channels.

In the specific embodiment shown in FIG. 4 (comprising four sample cells), it illustrates that a stable pre-determined pressure range is maintained by the regulation device during an extraction process (e.g., for about ten min). Then, the regulation device is set in a non-operating mode (the opening degree of the regulation device is maximal) to purge each sample cell. In the embodiment, for each of the four sample cells, purging is performed by sequentially applying two high-pressure pulses, for example, for each sample cell or each channel, 60 s, for example, is set, in which high-pressure purging is carried out for 15 s firstly, pausing for 15 s, and then a high pressure is applied for 15 s, followed by pausing for another 15 s, although this is only exemplary. Furthermore, for the embodiment comprising multiple sample cells, the individual sample cells may have inconsistent pressure values due to differences in the filled sample in the sample cell, the distribution of the liquid solvent in the sample, the air resistance of the individual pipelines themselves, and so on. According to the system and method of the present invention, inconsistencies or disadvantages caused by the above-mentioned differences can be minimized.

In summary, by means of the method and apparatus of the present invention, the extraction recovery rates of 70%-130% can be achieved for a compound having a low boiling point, and more than 95% for a compound having a high boiling point, respectively (see the example in the table below).

**Table 1: Fat Extraction Recovery Rate (Compound with High Boiling Point)**

| | Test Item | Extraction Condition | Recovery Rate |
|---|---|---|---|
| Fat Content of Milk Powder Sample | Extraction of Fat + Evaporation (to dryness) | Degrees Celsius, 10 ml | 97% |

Furthermore, by the method and apparatus of the present invention, the processing throughput can be increased (by at least 2.5 times) while ensuring the recovery rate, and see the following comparison table, for example.

**Table 2: Comparison of Processing Throughput of Present Invention to that of Prior Art**

| | Test Item | Sample Cell Size | Processing Throughput for Control Apparatus | Processing Throughput for Present Invention | Throughput Multiplier (n = 12) |
|---|---|---|---|---|---|
| Throughput | Extraction of PAH for Soil | 10 ml | 16 min/sample | 20.2 min/4 samples | 3.16 |
| | | 100 ml | 26.1 min/sample | 40.1 min/4 samples | 2.6 |

Hereinafter, the system and its apparatus in some examples, particularly its supply flow path, are specifically described with FIG. 4.

Gas, in particular inert gas, such as high-pressure nitrogen, can be separated into two gas paths after it flows out from a gas source 152. A first path is used for a first supply pipeline 111 of a first supply module 110, while a second path may be used for another supply module not described in detail herein (and not specifically stated herein). The gas from the first path flows through an optional filter 153 to a gas flow controlling device 114. After flowing through the gas flow controlling device 114, the first supply pipeline 111 may be branched into five branch pipelines 111a-111e by means of a first manifold, wherein one of switching devices 116a-116e, such as a valve, may be provided at each branch pipeline.

The liquid solvents may come from multiple different solvent containers, and the liquid solvents in these containers may be mixed (e.g., by a mixing valve) before they flow into the second supply pipeline 112 of the first supply module 110. The liquid solvents (no matter whether they are mixed) are pumped by a solvent pump 113 toward a switching valve 115. As can be seen from FIG. 4, the gas flowing through the first switching device 116a provided at the first branch pipeline (which may also be referred to as a main gas path) 111a may be mixed with the liquid solvent that does not flow through the switching valve 115, but may also directly flow through the switching valve 115 without mixing. The gas flowing through the second to fifth switching means 116b-116e provided at the second to fifth branch pipelines 111b-111e may be mixed inside the mixing device 117 with the liquid solvent flowing through the switching valve 115.

More specifically, when only gas is supplied to the sample cell, the first branch pipeline (main gas path) 111a of the first supply pipeline 111 is preferably used. The gas may flow from the first branch pipeline 111a to the switching valve 115, and may be separated into, by the switching valve 115, four sub-gas paths, so that the gas may be supplied to the first to fourth sample cells 122a-122d simultaneously or sequentially, so as to rapidly increase the pressure in the sample cells. However, it is appreciated, when only gas is supplied to the sample cell and/or evaporation container, four branch pipelines 111b-111e may be used instead of the main gas path, so that the gas is separated into four gas paths before the mixing device 117 without passing through the switching valve 115.

When only the liquid solvent is supplied to the sample cell, the liquid solvent can be pumped by the solvent pump 113 to the switching valve 115, separated into four sub-liquid paths by the switching valve 115, and then can be supplied to the first to fourth sample cells either simultaneously or sequentially to quickly wet (moisten) the sample in the sample cell, preventing pure dry of the sample in the sample cell.

When the mixture of the liquid solvent and gas is supplied to the sample cell, on one hand, the liquid solvent can be pumped by the solvent pump 113 to the switching valve 115, and is separated into four sub-liquid paths by the switching valve 115 to flow into the mixing means 117 by the four sub-liquid paths, and on the other hand, the gas flows into the mixing means 117 through the second to fifth branch pipelines 111b-111e to be mixed with the liquid solvent therein. After mixing, the gas-liquid mixture flows from the mixing means 117 to the first to fourth sample cells through the first to fourth mixing supply pipelines (first to fourth branch pipelines) 112a-112d, thereby dissolving the analyte in the sample in the sample cells. In other words, the mixture may be supplied simultaneously or sequentially to the first to fourth sample cells 122a-122d. It is appreciated that, the supply pipelines 112a-112d may be referred to as a portion of the first supply pipeline 111 when only gas is supplied, and may be referred to as a portion of the second supply pipeline 112 when only liquid solvent is supplied.

The liquid solvent containing the analyte may enter the first to fourth evaporation containers 141a-141d from the first to fourth sample cells 122a-122d, respectively, via the respective regulation devices 130a-130d, and evaporation may be initiated when it is needed to obtain desired concentrates.

As can be seen from FIG. 4, the first to fourth vacuum pipelines 142a-142d are fluidly communicated to the first to fourth evaporation containers 141a-141d, respectively, to allow for rapid reduced pressure evaporation within the first to fourth evaporation containers 141a-141d. Here, each evaporation container of the first to fourth evaporation containers 141a-141d comprises an evaporation large bottle and an evaporation small bottle (which may also be referred to as a sample vial) located above and below each evaporation container, respectively. Advantageously, the multiple evaporation containers can be arranged on an auto-rotating apparatus to facilitate subsequent replacement or monitoring.

Furthermore, gas can also be supplied to the first to fourth evaporation containers (or a portion of them) by the first supply module 110 (through the sample cell), so that blowing or purging is carried out. Further, purge gas may also be supplied to the first to fourth sample cells 122a-122d by the first supply module 110 to further collect the residual analyte remaining in the first to fourth sample cells 122a-122d into the first to fourth evaporation containers 141a-141d.

It may be appreciated that the first supply module of the present invention may have different practical boundary ranges as it includes different devices or components, although the boundary of the first supply module 110 is shown in a dashed line in FIG. 4. For example, when the first supply module 110 includes a gas source and/or a solvent source, a boundary range different from the one shown in FIG. 4 may be produced.

Although various embodiments of the present invention are described in the accompanying drawings with reference to examples of gas preparation systems including gas-assisted solvent extraction technology and methods of collecting analytes from samples By means of the gas preparation systems, it should be understood that embodiments within the scope of the present invention may be applied to systems, devices and methods having similar structures and / or functions.

The foregoing description presents numerous features and advantages, including various alternative embodiments, and details of the structure and function of apparatus and methods. This disclosure is intended to be exemplary, not exhaustive or limiting.

It will be apparent to those skilled in the art that various modifications may be made within the full scope indicated by the broad general meaning of the terms expressed in the appended claims, especially in terms of structures, materials, elements, components, shape, size and arrangement of components, including the combination of these aspects within the scope of the principles described herein. To the extent that these various modifications do not depart from the spirit and scope of the appended claims, it is intended that they are also included herein.

## Claims

1. A method of extracting an analyte from a sample with a gas preparation system, the gas preparation system comprising an extraction module and an evaporation module which are selectively in a fluid communication, wherein the extraction module comprises a sample cell for placing the sample containing the analyte, and the evaporation module comprises an evaporation container for evaporating liquid solvent containing the analyte,
wherein the method comprises following steps:
a supplying step of supplying the sample cell with gas and liquid solvent which solvent can dissolve the analyte in the sample;
a receiving step of receiving the liquid solvent containing the analyte from the extraction module to the evaporation container;
an evaporating step of evaporating the liquid solvent containing the analyte in the evaporation container, wherein the evaporation module is in fluid communication with the sample cell;
wherein starting to perform the evaporating step is allowed after at least a part of the liquid solvent containing the analyte from the extraction module enters the evaporation container.

2. The method according to claim 1, wherein the supplying step comprises a first supplying sub-step of supplying the sample cell with a mixture of the gas and the liquid solvent.

3. The method according to claim 2, wherein the first supplying sub-step comprises supplying gas with a preset flow rate to the liquid solvent by a gas flow controlling device, in order to mix the gas with the liquid solvent.

4. The method according to any one of claims 1-3, wherein the gas preparation system further comprises a regulation device arranged between the sample cell and the evaporation container, wherein the regulation device includes an inlet in communication with the sample cell and an outlet in communication with the evaporation container, wherein fluid can flow from the inlet via a flow path inside the regulation device out of the outlet, and wherein the receiving step further comprises: regulating opening degree of the flow path based on pressure in the sample cell by means of the regulation device, thereby maintaining the pressure in the sample cell within a preset range, and wherein the liquid solvent is received to the evaporation container via the flow path.

5. The method according to claim 2, wherein the extraction module includes multiple sample cells, the evaporation module includes multiple evaporation containers, wherein each sample cell of the multiple sample cells is selectively in fluid communication with a corresponding evaporation container of the multiple evaporation containers, and wherein the first supplying sub-step comprises multiple supplying cycles in each of which the mixture is sequentially supplied to each sample cell of the multiple sample cells.

6. The method according to claim 5, wherein time duration of supplying the mixture to each sample cell is equal within the same supplying cycle; or the supplied amount of the mixture to each sample cell is equal within the same supplying cycle.

7. The method according to claim 1, wherein in the evaporation step, the liquid solvent containing the analyte in the evaporation container is evaporated by heating the evaporation container and/or depressurizing the interior thereof.

8. The method according to claim 7, wherein the method further comprises preheating the evaporation container before the evaporating step.

9. The method according to claim 1, wherein the method further comprises heating the sample cell before the supplying step.

10. A gas preparation system for extracting an analyte from a sample, comprising:
an extraction module including a sample cell for placing the sample containing the analyte;
a first supply module capable of supplying gas and liquid solvent which solvent can dissolve the analyte in the sample to the sample cell;
an evaporation module comprising an evaporation container for evaporating liquid solvent containing the analyte, wherein the evaporation container is in fluid communication with the sample call when the liquid solvent is evaporated;
a controller configured to allow the evaporation container to evaporate the liquid solvent containing the analyte in the container after at least a part of the liquid solvent containing the analyte from the extraction module enters the evaporation container.

11. The gas preparation system according to claim 10, wherein the first supply module includes a mixing means for mixing the gas with the liquid solvent for supplying a mixture to the sample cell.

12. The gas preparation system according to claim 11, wherein the first supply module includes a first supply pipeline for supplying the gas and a gas flow controlling device in fluid communication with the first supply pipeline, wherein the gas flow controlling device is configured to cause the gas with a preset flow rate to flow into the mixing means when the first supply module supplies the mixture to the sample cell, so as to mix the gas with the liquid solvent flowing into the mixing means.

13. The gas preparation system according to any one of claims 10-12, wherein the gas preparation system further comprises a regulation device arranged between the sample cell and the evaporation container, wherein the regulation device includes an inlet in communication with the sample cell and an outlet in communication with the evaporation container, wherein fluid can flow from the inlet via a flow path inside the regulation device out of the outlet, and wherein regulation device is configured to regulate opening degree of the flow path based on pressure in the sample cell, thereby maintaining the pressure in the sample cell within a preset range.

14. The gas preparation system according to claim 13, wherein the regulation device includes a first valve body portion, a second valve body portion and a cavity defined by them, wherein the inlet and the outlet are disposed on the first valve body portion, wherein a pre-loaded assembly of the regulation device is supported in the cavity and is capable of being moved between a blocking position for blocking the flow path and a non-blocking position for releasing the flow path, and wherein the opening degree is defined by the space between the pre-loaded assembly and the first valve body portion.

15. The gas preparation system according to claim 10, wherein the extraction module includes multiple sample cells and the evaporation module includes multiple evaporation containers, wherein each sample cell of the multiple sample cells is selectively in fluidic communication with a corresponding evaporation container of the multiple evaporation containers.

16. The gas preparation system according to claim 15, wherein the first supply module further includes a switching valve having multiple operational configurations, wherein each operational configuration of the multiple operational configurations is used to direct the liquid solvent to flow to a corresponding sample cell of the multiple sample cells in a corresponding time period of each supply cycle.

17. The gas preparation system according to claim 16, wherein the first supply pipeline includes multiple branch pipelines and multiple switching means, wherein each switching means of the multiple switching means is in communication with a corresponding one branch pipeline of the multiple branch pipelines, such that the one branch pipeline is selectively in fluid communication with a corresponding sample cell of the multiple sample cells, wherein by means of the multiple switching means, the gas is directed to flow to a corresponding sample cell of the multiple sample cells in a corresponding time period of each supply cycle.

18. The gas preparation system according to claim 15, further comprising multiple regulation devices, wherein between each sample cell and a corresponding evaporation container, one regulation device is arranged.

19. The gas preparation system according to claim 10, wherein the evaporation module includes a first heating device for heating the evaporation container so as to evaporate the liquid solvent containing the analyte in the container.
